# EUROPEAN PATENT APPLICATION

(11) **EP 2 413 280 A1**
(43) Date of publication of application: **01.02.2012**
(21) Application number: 11175383.6
(22) Date of filing: 26.07.2011
(51) Int. Cl.: G06Q 40/00

(54) **System and method for delivery of dynamic personalized sliders online**

(30) Priority: 26.07.2010 US 367548 P
(71) Applicant: Wonga Technology Limited, Dublin (IE)
(72) Inventor: Hurwitz, Jonty, London, NW1 7SN (GB); Damelin, Errol, London, NW1 7SN (GB)
(74) Representative: Coyle, Philip Aidan

(57) **Abstract**

There is provided, in accordance with an embodiment of the present invention, an apparatus, system, and method for generating a personalized online loan, including: a set of interactive product sliders being operable by a remote user using a GUI; a slider calculation system; and a slider calculation database including user credit data, wherein the database supplies user data to the slider calculation system to enable generation of personalized interactive product sliders.

## Description

### CROSS REFERENCE TO RELATED APPLICATIONS

This application claims priority from US Provisional Patent Application No. 61/367,548, filed 26 July 2010, entitled **"SYSTEM AND METHOD FOR DELIVERY OF DYNAMIC PERSONALIZED SLIDERS ONLINE"**, which is incorporated in its entirety herein by reference.

### FIELD OF THE INVENTION

The present invention relates to methods and devices useful in managing consumer credit. Specifically, embodiments of the present invention relate to online systems, methods and apparatuses that provide ways to acquire personalized consumer credit.

### BACKGROUND OF THE INVENTION

In general, financial services products are not offered in a way online that is easy for customers to see exactly what their total cost of credit would be. These offerings typically use annualized interest rates as a way of indicating to customers what their repayments will look like. This method has proven confusing for non-sophisticated users of consumer credit. In general, financial services companies offer generic products online and then encouraging customers to call in or log back in later to get the details of an offer for credit.

It would be highly advantageous to have a system that would enable customers or users to dynamically control, shape or design desired products or services, on a personalized basis.

### SUMMARY OF THE INVENTION

There is provided, in accordance with an embodiment of the present invention, an apparatus, system, and method for generating a personalized online loan, including: a set of interactive product sliders being operable by a remote user using a GUI; a slider calculation system; and a slider calculation database including user credit data, wherein the database supplies user data to the slider calculation system to enable generation of personalized interactive product sliders.

According to some embodiments of the present invention, the slider calculation system is adapted to make automated personalized loan decisions. In some cases these decisions may be made in real time. In some examples, the range and/or type of the personalized interactive product sliders are configured in accordance with consumer data analysis. In some embodiments the personalized interactive product slider is configured according to one or more of the group of data sources consisting of user credit data, user behavior data, user profile data, and user preference data.

According to other embodiments, the GUI includes a file(s) with instructions to execute commands to enable the configuration of a personalized financial product offering substantially in real time. In yet other embodiments an application for generating the product sliders includes a file(s) with instructions to execute commands to enable the configuration of a personalized financial product offering substantially in real time. According to some embodiments the slider calculation system includes a memory having stored thereon consumer credit provision related instructions to analyze user related data substantially in real time, to determine the configuration of sliders to be presented to a user.

In further embodiment a system is provided for purchasing a personalized financial product in real time, including a set of interactive product sliders being operable by a remote user using a GUI; a slider calculation system coupled to a slider calculation database including user credit data, wherein the financial product is generated by interacting with one or more dynamic sliders, the sliders being defined according to user credit data analysis.

In some embodiments the user credit data analysis is executed substantially in real time and/or in an automated fashion. In some embodiments the user credit data is selected from one or more of the group of data sources consisting of user credit data, user behavior data, user profile data, and user preference data.

According to some embodiments, a method of purchasing a personalized financial product is provided, including accessing a slider interface, by a product consumer; gathering consumer credit related data; generating dynamic slider configuration in relation to the consumer credit related data; and interacting with one or more dynamic sliders to reflect a financial product required by the consumer.

In some embodiments the method may include providing a consumer identification step to determine consumer user data. In some embodiments the step of generating slider configuration may include configuring slider ranges and/or slider types. In some examples, the generating of slider configuration may include making a substantially automated loan decision, optionally substantially in real time. In some embodiments the slider(s) may be configured according to user credit data, user behavior data, user profile data, user preference data, and/or other relevant user related data.

### BRIEF DESCRIPTION OF THE DRAWINGS

The principles and operation of the system, apparatus, and method according to the present invention may be better understood with reference to the drawings, and the following description, it being understood that these drawings are given for illustrative purposes only and are not meant to be limiting, wherein:

Fig. 1 is a schematic system diagram depicting components of a system for generating personalized sliders online, according to some embodiments;

Fig. 2 is a flow diagram indicating the process by which personalized sliders identify the user and are adjusted according to the identified user parameters, according to some embodiments; and

Fig. 3 is a flow diagram indicating limits provided by personalized sliders, which may be used to define product or service configuration, according to some embodiments. It will be appreciated that for simplicity and clarity of illustration, elements shown in the drawings have not necessarily been drawn to scale. For example, the dimensions of some of the elements may be exaggerated relative to other elements for clarity. Further, where considered appropriate, reference numerals may be repeated among the drawings to indicate corresponding or analogous elements throughout the serial views.

### DETAILED DESCRIPTION OF THE INVENTION

The following description is presented to enable one of ordinary skill in the art to make and use the invention as provided in the context of a particular application and its requirements. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In other instances, well-known methods, procedures, and components have not been described in detail so as not to obscure the present invention.

The word/phrase "slider" as used herein may include a one or more interactive panels, boxes, screens, graphical icons, visual indicators, or other interactive objects or Graphic User Interfaces (hereinafter "GUI") that may be manipulated or controlled by a user or in response to user sensitive parameters or criteria. In one example a slider is a GUI that enables a user to select from a range of values by dragging a pointer across a track or in a relevant pattern or direction. The generic slider control or object is widespread across many platforms e.g. OS C, Linux, Windows as well as on the web. The term Graphical User Interface (GUI) may defined as "a type of user interface item that allows people to interact with programs in more ways than typing" (see: http://en.wikipedia.org/wiki/Graphical user interface). The term "credit data" as used herein may encompass any relevant data sources used to determine an individuals' viability for credit provision, including bank data, credit card data, debit card data, business data, personal data, purchasing data, selling data, transactional data. The term "financial product(s)" as used herein may encompass a variety of financial related products and services, such as loans, provision of credit, grants, bridge loans, debt provision.

Embodiments of the present invention enable customers or users to dynamically control, shape or design desired products or services according to defined parameters and/or in accordance with criteria based on a user's profile. In one embodiment users may dynamically control, shape or design desired financial products according to a set of lending parameters and/or a set of criteria based on the user's lending/borrowing profile. Furthermore, other embodiments of the present invention enable delivery of real time credit-driven financial product offerings that are personalized for the specific user.

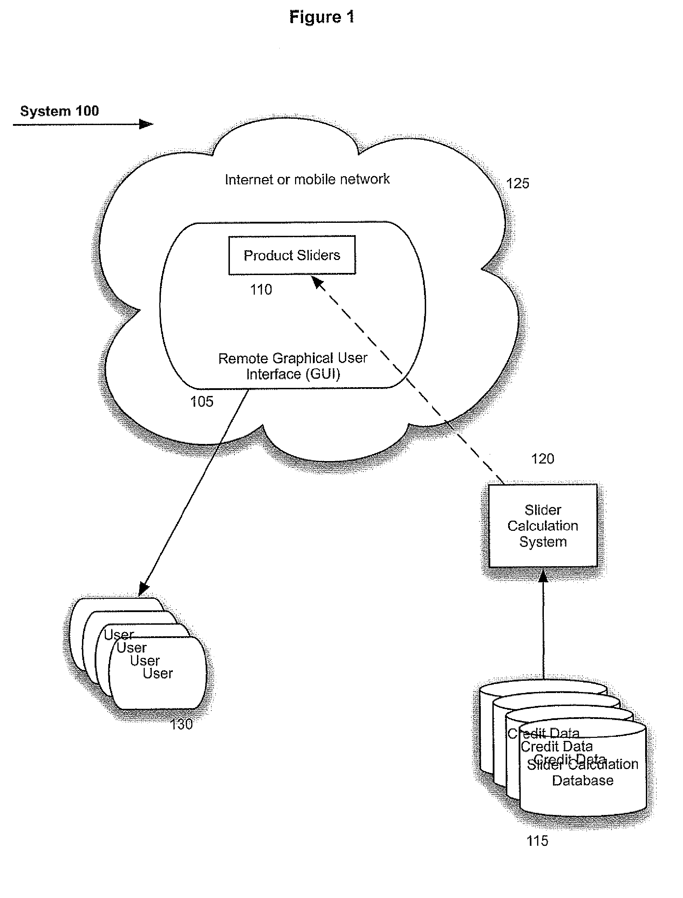

Reference is now made to **Fig. 1**, which is a schematic system diagram describing a system for generation of dynamic GUI sliders for shaping financial products, according to some embodiments. As can be seen in Fig. 1, a system 100 is depicted, which shows the work flow between various system components in facilitating a remote user 130 to use a remote interactive slider GUI 105, for example, a financial product selector slider[0015]. In system 100, one or more Product Sliders 110, for example financial product sliders, may be displayed or delivered to one or more remote users 130 via GUI 105, delivered via a communications network such as the Internet or mobile network 125. The bounds or limits of these sliders and/or the decisions of which sliders to display, may be determined by a set of calculations and/or assumptions done by a Slider Calculation System 120 for example, a Slider bound and visibility calculation system, optionally used by a product vendor or credit provider to calculate a personalized financial product for the user. The personalized product sliders 110 may allow the user via GUI 105 to "reshape" the financial product to best suit their own needs or requirements. GUI 105 and/or an application or for generating product sliders 110 may include a file(s) with instructions to execute commands to enable the configuration of personalized financial product offerings, substantially in real time. Slider Calculation System 120 may utilize various Credit Data, transactional data and/or behavioral data etc., or other suitable data inputs from Slider Calculation Database(s) 115 to determine a personalized product or service offering for a user. The limits of such a product may be expressed or delivered to the user using dynamic sliders with given slider bounds or ranges, within GUI 105. Slider Calculation System 120 may include a memory having stored thereon consumer credit provision related instructions to analyze user related data substantially in real time, to determine the ranges and/or types of sliders to be presented to the user.

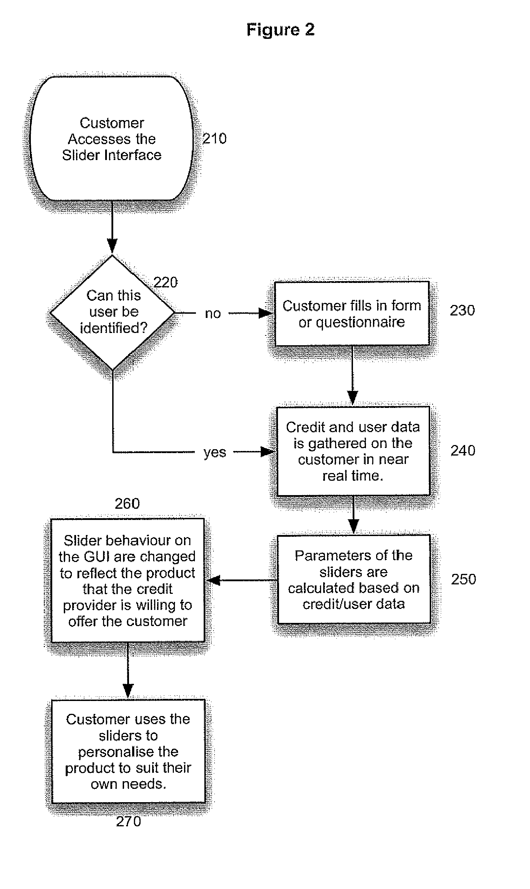

Reference is now made to **Fig. 2** which is a flow diagram indicating the process by which the sliders are automatically adjusted or personalized according to specific user parameters, according to some embodiments. As can be seen in Fig. 2, a parameter identification flow may include one or more of the following steps.

In stage 210, a remote user or customer accesses a slider(s) via a User Interface delivered to the user's client device or station. At stage 220, the system attempts to identify the customer, optionally based on prior customer registration. For example, industry techniques and/or customized techniques for customer identification may be used, including but not limited to cookies, IP address, login, short code, machine ID or other relevant techniques or methods. Each user device and/or platform that may be used may have its own system or method of providing a user identifier, in accordance with industry standard teclmiques. If the customer cannot be identified, then the slider(s) bounds may be kept generic. In some embodiments, at stage 230, the customer may be asked to provide additional data, for example, in a form, questionnaire, link and/or attachment.

At stage 240, credit and user data may be collected from a range of credit bureaus, financial systems and other data sources is substantial or near real time. In some embodiments the credit and user may be gathered during a session. In other embodiments the credit and user may be gathered prior to a session. In still further embodiments the credit and user may be gathered substantially continuously. If the customer can be identified at stage 220 then at stage 240, the user data may be automatically collected from a range of credit bureaus, financial systems and other data sources is substantial or near real time. Various algorithms, methods or applications may be run on one or more credit and/or user data sources, to provide user credit scores or profiles.

At stage 250, the user profiles may be processed and applied into the Slider system calculations in order to determine the ranges or limits of one or more sliders that are to be delivered to the specific user, representing the personalized product offerings being made available to the particular user. In some embodiments one or more data sources may be processed and optionally integrated to reflect complex user profiles, to which the slider parameters or ranges may be determined. For example, one or more credit scores or user profiles may be integrated into the slider interface to provide slider parameters, limits or ranges that are personalized for the user based on the credit scores or user profiles generated.

At stage 260 the system alters the slider configuration displayed to the user to reflect the products being offered to the user. Once the credit score or profile of a customer has been calculated or determined, the financial product providing entity may determine substantially in real time or near real time what product or products to offer to the customer, whereby the sliders (hereinafter referred to as personalized sliders) are automatically updated in the User Interface to give the customer freedom to make product decisions based on the bounds that the product provider has determined.

At stage 270, the user may control the slider(s) provided, for example, by dragging, clicking or otherwise manipulating the slider(s) to discover the options of products available to the user within the range provided by the product supplier. In one example, where a credit provider offers a particular client credit up to $500, for up to 30 days, two sliders, one for amount and one for time, may be manipulated by the user within these ranges, to help the user immediately see the various options available and the payback costs associated with the various products on offer. Of course, other sliders, ranges, products, services etc. may be used. According to some embodiments, dynamic sliders may incorporate ranges or limits that incorporate additional levels of data displayed by text, sounds or graphics. In one example, colors may be used to illustrate levels of risk, gain etc. In other examples sounds may be used to indicate levels of risk, gain etc. In other examples graphics may be used to indicate levels of risk, gain etc.

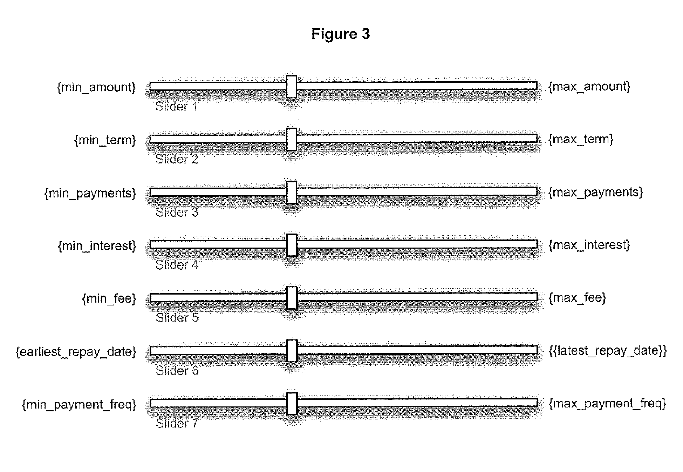

Reference is now made to **Fig. 3**, which depicts a series of sliders, wherein each slider represents a different feature of a financial product. As can be seen in Fig. 3, one or more personalized sliders may be provided to a remote user or customer, based on the customer's credit points or profile, or other selected customer data. The various sliders may be controlled or manipulated by the customer, within the slider ranges provided by the system. The following table defines selected terminology that is used in the slider examples provided in Fig. 3. Of course, additional or alternative sliders or combinations of sliders may be used.

| **Variable** | **description .** | **Reference** |
|---|---|---|
| {min_amount} | The minimum amount (currency value) that the product provider is willing to offer the customer | Slider 1 |
| {max_amount} | The maximum amount (currency value) that the product provider is willing to offer the customer | Slider 1 |
| {min_term} | The minimum term (time) for which the product provider is willing to offer the product | Slider 2 |
| {max_term} | The maximum term (time) for which the product provider is willing to offer the product | Slider 2 |
| (min_payments) | The minimum number of payments that the customer will need to make in order to complete the transaction or contract | Slider 3 |
| {max_payments} | The maximum number of payments that the customer will need to make in order to fulfill the transaction or contract | Slider 3 |
| {min_interest} | The minimum interest rate that the product provider is willing to offer the customer | Slider 4 |
| {max_interest} | The maximum interest rate that the product provider is willing to offer the customer | Slider 4 |
| {min_fee} | The minimum fee (e.g. transmission fee, fulfillment fee, transaction fee etc.) that the product provider is willing to charge the customer | Slider 5 |
| {max_fee} | The maximum fee (e.g. transmission fee, fulfillment fee, transaction fee etc.) that the product provider is willing to charge the customer | Slider 5 |
| {earliest_payment_date} | The earliest future date at which the product provider is willing to accept a first payment | Slider 6 |
| {latest_payment_date} | The latest future date at which the product provider is willing to accept a first payment | Slider 6 |
| {min_payment_freq} | In certain products, multiple payments are required., This variable defines the minimum payment frequency that the product provider is willing to offer the customer. | Slider 7 |
| {max__payment_freq} | In certain products, multiple payments are required. This variable defines the maximum payment frequency that the product provider is willing to offer the customer. | Slider 7 |

It is noted that not all of these sliders may be relevant to a particular customer or set of customers at all times, and one or more sliders or combinations of sliders may be provided by the GUI, depending on the customers category, geography, behavior, preferences, profile, requests, nationality, user status etc. In one example, different sliders may be relevant for users of different nationalities, or in accordance with the geographical locations of a user's bank account. In a further example, different sliders may be made available to users of different status, such as heavy system users, light users, frequent users, infrequent users, large loaners, micro loaners, proven re-payers, problematic re-payers, corporate clients, individual clients, and more.

In other embodiments the decision as to which sliders to provide to the customer may be based on the customers' credit data/score or other relevant user data. Accordingly, once the product providers' system algorithms have determined what the bounds are of the product or service it is willing to offer (see Stage 140 in Fig. 2), and/or the systems processed user data has determined what the bounds are of the product it is willing to offer, certain sliders or combinations of sliders may be made available (i.e. visible/invisible) to the user. In further embodiments the decisions of which sliders to display to a user may depend on the generic nature of the product being offered or requested. In some cases one or more sliders may be offered to the user to indicate the nature of the product. According to further embodiments, elements of the system as described above may be used to provide dynamic sliders for a variety of online products and services. For example, a remote user when shopping for a computer may be able to use one or more sliders, such as price, size, speed, power etc. to efficiently set their preferences or range of options. In a further example, if a remote user is browsing for travel services, he or she may use one or more sliders to set their preferences for products or proposals, for example by indicating budget, distance, language, level of luxury etc. In another example, where a user is looking to acquire services via a Website, the user may access one or more sliders to set their preferences in terms of price, type, risk, location etc. Of course, any other relevant sliders representing other preferences, limits, ranges, or options may be used.

According to some embodiments, a system for generating a dynamic user slider is provided, comprising elements described herein, wherein the slider is configured according to one or more of the group of data sources including user credit data, user behavior data, user profile data, and user preference data.

According to some embodiments, a system for purchasing financial products is provided, comprising elements described herein, wherein the financial products are generated by interacting with one or more dynamic sliders, which are configured according to user credit data.

According to some embodiments, a system for enabling entry of user parameters using a dynamic slider is provided, comprising elements described herein, wherein the slider is configured according to one or more of the group of data sources including user credit data, user behavior data, user profile data, and user preference data.

According to some embodiments, a method for generating a dynamic user slider is provided, comprising elements described herein, wherein the slider is configured according to one or more of the group of data sources including user credit data, user behavior data, user profile data, and user preference data.

According to some embodiments, a method for purchasing financial products is provided, comprising elements described herein, wherein the financial products are generated by interacting with one or more dynamic sliders, which may be configured according to user credit data.

According to some embodiments, a method for enabling entry of user parameters using a dynamic slider is provided, comprising elements described herein, wherein the slider is configured according to one or more of the group of data sources including user credit data, user behavior data, user profile data, and user preference data.

The foregoing description of the embodiments of the invention has been presented for the purposes of illustration and description. It is not intended to be exhaustive or to limit the invention to the precise form disclosed. It should be appreciated by persons skilled in the art that many modifications, variations, substitutions, changes, and equivalents are possible in light of the above teaching. It is, therefore, to be understood that the appended claims are intended to cover all such modifications and changes as fall within the true spirit of the invention.

## Claims

1. A system for generating a personalized online loan, comprising:
a set of interactive product sliders being operable by a remote user using a GUI;
a slider calculation system; and
a slider calculation database including user credit data,
wherein said database supplies user data to said slider calculation system to enable generation of personalized interactive product sliders.

2. The system of claim 1, wherein said slider calculation system is adapted to make automated personalized loan decisions.

3. The system of claim 2, wherein said loan decisions are made substantially in real time.

4. The system of claim 1, wherein the range of said personalized interactive product sliders are configured in accordance with consumer data analysis.

5. The system of claim 1, wherein the type of said personalized interactive product sliders are configured in accordance with consumer data analysis.

6. The system of claim 1, wherein said personalized interactive product slider is configured according to one or more of the group of data sources consisting of user credit data, user behavior data, user profile data, and user preference data.

7. The system of claim 1, wherein said GUI includes a file(s) with instructions to execute commands to enable the configuration of a personalized financial product offering substantially in real time.

8. The system of claim 1, wherein an application for generating said product sliders includes a file(s) with instructions to execute commands to enable the configuration of a personalized financial product offering substantially in real time.

9. The system of claim 1, wherein said slider calculation system includes a memory having stored thereon consumer credit provision related instructions to analyze user related data substantially in real time, to determine the configuration of sliders to be presented to said user.

10. A system for purchasing a personalized financial product in real time, comprising:
a set of interactive product sliders being operable by a remote user using a GUI;
a slider calculation system coupled to a slider calculation database including user credit data, wherein said financial product is generated by interacting with one or more dynamic sliders, said sliders being defined according to user credit data analysis.

11. The system of claim 10, wherein said user credit data analysis is executed substantially in real time.

12. The system of claim 10, wherein said user credit data analysis is executed in an automated fashion.

13. The system of claim 10, wherein said user credit data is selected from one or more of the group of data sources consisting of user credit data, user behavior data, user profile data, and user preference data.

14. The system for generating a personalized online loan of claim 1, being used for purchasing a personalized financial product.
